# EUROPÄISCHE PATENTSCHRIFT

(11) **EP 1 654 739 B1**
(45) Veröffentlichungstag und Bekanntmachung des Hinweises auf die Patenterteilung: **06.08.2008**
(21) Anmeldenummer: 04764053.7
(22) Anmeldetag: 12.08.2004
(51) Int. Cl.: H01B 1/22, C09D 5/24

(54) **HERSTELLUNG ELEKTRISCH LEITFÄHIGER, FLEXIBLER FLÄCHENGEBILDE**
METHOD FOR PRODUCING ELECTRICALLY CONDUCTIVE, FLEXIBLE FLAT MATERIALS
REALISATION DE STRUCTURES PLANES SOUPLES ELECTRIQUEMENT CONDUCTRICES

(30) Priorität: 13.08.2003 DE 10337253
(43) Veröffentlichungstag der Anmeldung: 10.05.2006
(73) Patentinhaber: Ritter, Wolfgang, 67591 Offstein (DE); FRITZ BLANKE GMBH & CO. KG, 32108 Bad Salzuflen (DE)
(72) Erfinder: RITTER, Wolfgang, 67591 Offstein (DE); SCHNEIDER, Manfred, 32760 Detmold (DE)
(74) Vertreter: Reitstötter - Kinzebach
(86) Internationale Anmeldenummer: PCT/EP2004/009052
(87) Internationale Veröffentlichungsnummer: WO 2005/020246

(56) Entgegenhaltungen:
- EP-A- 1 284 278
- WO-A-20/04024436
- US-A- 5 804 291
- US-A- 5 892 476
- US-B1- 6 576 336

## Beschreibung

Die vorliegende Erfindung betrifft ein Verfahren zur Herstellung elektrisch leitfähiger, flexibler Flächengebilde und die nach diesem Verfahren erhaltenen Flächengebilde.
Die Erfindung betrifft auch die Verwendung der elektrisch leitfähigen, flexiblen Flächengebilde zur Abschirmung von elektromagnetischen Feldern bzw. elektromagnetischer Strahlung, insbesondere hochfrequenten elektromagnetischen Feldern im Frequenzbereich oberhalb 10 MHz und speziell oberhalb 100 MHz.

Elektromagnetische Felder entstehen bekanntermaßen, wenn ein elektrischer Strom fließt oder eine elektrische Spannung vorliegt. Insbesondere hochfrequente Felder, wie sie beispielsweise bei Fernseh-, Radio- und Richtfunksendern, Mobilfunkanlagen, EDV-Anlagen, stellen in vieler Hinsicht eine ernstzunehmende Umweltbelastung dar. Beispielsweise können äußere elektromagnetische Felder (Störfelder) Störungen an elektronischen Messgeräten, Femmeldeeinrichtungen, Antennen, Computern, Mikroprozessoren, elektronischen Geräten für die Navigation von Schiffen und Flugzeugen oder allgemein an elektrischen und elektronischen Geräten, deren Funktion auf elektromagnetischen Prinzipien basieren, mit z.T. folgenschwere Auswirkungen hervorrufen. In diesem Zusammenhang spielt auch der Schutz elektronischer Geräte vor Beschädigung durch extreme Felder, wie sie bei Blitzschlägen auftreten, einen wichtiger Aspekt. Ein weiterer Gesichtspunkt ist die Abhörsicherheit von EDV-Geräten, z. B. von Computerbildschirmen, da die Verarbeitung und Visualisierung von Daten in diesen Geräten selber elektromagnetische Felder erzeugt, die mittels geeigneter Empfangsgeräte von unberechtigten Dritten abgehört und ausgewertet werden können. Weiterhin vermutet man, dass in Lebewesen, die regelmäßig oder über längere Zeiträume elektromagnetischen Feldern exponiert sind, Gesundheitsschäden hervorgerufen werden. Die Abschirmung von elektromagnetischen Feldern ist daher in vielen zivilen Bereichen wie Medizin, Automobilindustrie, Büro, Haushalt, Industrieanlagen, Telekommunikations- und EDV-Anlagen sowie auf militärischem Gebiet sowohl zum Personen- wie auch zum Sachschutz erforderlich.

Die Abschirmung von elektromagnetischen Feldern nutzt bekanntermaßen den Faraday-Effekt. So werden häufig Gegenstände, die vor elektromagnetischen Feldern geschützt werden sollen mit Metallgeflechten, Metallblechen oder Metallfolien im Sinne eines Faraday'schen Käfigs umgeben. In ähnlicher Weise können auch Quellen elektromagnetischer Felder abgeschirmt werden. Diese Abschirmungen sind jedoch üblicherweise starr und werden daher in die zu schützenden, bzw. abzuschirmenden Geräte eingebaut.

Für viele Zwecke benötigt man flexible Abschirmungen. Hier bieten sich prinzipiell elektrisch leitfähige Textilien oder vergleichbare flächige Materialien wie Leder oder Kunststofffolien an, die aufgrund ihrer Natur flexibel sind, und daher z. B. als Schutzkleidung, Schutzüberzug für Geräte oder zur Abschirmung von Räumen oder Fenstern in Form von Vorhängen, Tapeten oder Raumteilern eingesetzt werden können. Die bislang bekannten elektrisch leitfähigen Textilien verdanken ihre Leitfähigkeit metallischen Fäden, vorzugsweise Kupfer oder Silber-beschichteten Kupferfäden, die in die Gewebe eingewebt werden. Um die Flexibilität des Gewebes beizubehalten, müssen die verwendeten Fäden sehr dünn sein. Nachteilig an diesen Geweben ist ihre relativ aufwendige und daher teure Herstellung. Ferner besteht ein verstärktes Interesse daran, Gewebe oder andere flexible Flächengebilde erst nachträglich mit der elektrischen Leitfähigkeit auszurüsten. Dies hätte den Vorteil, dass man die Schutzvorrichtung z. B. aus Fäden bzw. Fasermaterialien unterschiedlichster Herstellverfahren anfertigen könnte.

Die Europäische Patentanmeldung EP-A 1284278 beschreibt Zusammensetzungen zur Herstellung elektrisch leitfähiger Beschichtungen auf flexiblen Trägermaterialien, die als elektrisch leitfähigen Bestandteil ein Pulver mit Kern-Schale-Morphologie enthalten, worin die Schale ein Edelmetall, z. B. Silber ist. Diese Zusammensetzungen werden vollflächig auf textile Träger aufgetragen. Hierdurch erhält man Textilien, die elektrische Leitfähigkeit aufweisen. Die zur Erreichung einer wirksamen Abschirmung elektromagnetischer Felder erforderliche Auftragsmenge an edelmetallhaltigem Pulver ist vergleichsweise hoch. Nachteilig ist zudem der steife Griff, den die so ausgerüsteten Textilien aufweisen.

Der vorliegenden Erfindung liegt somit die Aufgabe zugrunde, ein Verfahren zur Herstellung elektrisch leitfähiger, flexibler Flächengebilde, wie Textilien oder Leder, bereitzustellen, das die oben geschilderten Nachteile des Standes der Technik überwindet. Insbesondere sollte der Auftrag an Edelmetall geringer sein, ohne dass die elektrischen Eigenschaften des Flächengebildes nachteilig beeinflusst werden. Die Flächengebilde sollen eine wirksame Abschirmung hochfrequenter elektromagnetischer Felder, insbesondere elektromagnetischer Felder im Frequenzbereich von 100 MHz bis 10 GHz zu erlauben. Diese Eigenschaften sollten auch bei mechanischer Beanspruchung nicht verloren gehen. Zudem sollte das flexible Material, insbesondere im Falle textiler Träger einen weichen Griff aufweisen.

Diese Aufgabe konnte überraschenderweise durch ein Verfahren gelöst werden, bei dem man wässrige, filmbildende Polymerzusammensetzung, enthaltend:
i. ein Bindemittel B, umfassend wenigstens ein filmbildendes Polymer und
ii. wenigstens ein feinteiliges, nicht filmbildendes Pulver P mit Kem-Schale-Morphologie, worin das die Schale bildende Material aus wenigstens einem Edelmetall oder einer überwiegend aus wenigstens einem Edelmetall bestehenden Legierung besteht,
wobei das Gewichtsverhältnis von Bindemittel B zu Pulver P im Bereich von 1,5:1 bis 1:20 liegt, in Form eines netzförmigen Musters auf die Oberfläche eines flexiblen, flächigen Trägers, der elektrischen Strom nicht leitet, aufbringt. Die mit der Polymerzusammensetzung bedeckten Bereiche des netzförmigen Musters machen dabei 10 bis 60 %, vorzugsweise 15 bis 50 % und insbesondere 20 bis 40 % der Gesamtfläche des Musters aus.

Gegenstand der Erfindung ist daher das hier beschriebene Verfahren zur Herstellung elektrisch leitfähiger, flexibler Flächengebilde. Gegenstand der Erfindung ist auch das so erhältliche, elektrisch leitfähige flexible Flächengebilde.

Die wässrige Polymerzusammensetzung wird erfindungsgemäß als netzförmiges Muster auf einen elektrisch nicht leitfähigen, flexiblen Träger aufgebracht und verleiht so diesem Träger die gewünschten elektrischen bzw. elektromagnetischen Eigenschaften. Unter einem netzförmigen Muster versteht man ein aus einer Vielzahl von Linien gebildetes Muster, wobei sich die Linien in einer Vielzahl von Punkten schneiden. Die Linien können gerade oder gekrümmt sein, wobei die Krümmung regelmäßig oder unregelmäßig sein kann. Erfindungsgemäß bevorzugt werden netzförmige Muster, worin eine erste Linienschar, worin die Linien vorzugsweise zueinander näherungsweise parallel sind, sich mit einer zweiten Linienschar aus zueinander parallelen Linien kreuzt, d. h. die Linien der ersten Linienschar schneiden sich mit den Linien der zweiten Linienschar in einer Vielzahl von Punkten. Der Begriff der Linie ist hierbei nicht im streng mathematischen Sinne zu verstehen, sondern bezeichnet ein linienartiges Gebilde mit einer definierten Breite, das im Folgenden auch als Streifen bezeichnet wird. Erfindungsgemäß bevorzugt sind die Linien des Musters gerade, d. h. nicht oder nur geringfügig gekrümmt. Der Winkel, den die Linien der ersten Linienschar zu den Linien der zweiten Linienschar einnehmen, beträgt vorzugsweise 90° ± 20°, insbesondere 90° ± 10° und speziell 90° ± 5°.

Die Breite und der Abstand der Linien, welche das netzförmige Muster bilden, sind so aufeinander abgestimmt, dass der von den linienförmigen Gebilden abgedeckte Bereich 10 bis 60 %, insbesondere 15 bis 50 % und speziell 20 bis 40 % der Gesamtfläche des Musters ausmacht.

Für die elektrischen Eigenschaften des erfindungsgemäßen Flächengebilde hat es sich als vorteilhaft erwiesen, wenn die Maschenweite bzw. das Raster des netzförmigen Musters im Bereich von 0,5 bis 5 cm und speziell im Bereich von 1 bis 3 cm liegt.

Bevorzugt beträgt die Breite der Linien im Mittel wenigstens 0,5 mm, vorzugsweise wenigstens 1 mm, häufig nicht mehr als 5 mm, bevorzugt nicht mehr als 3 mm und speziell 1 bis 3 mm. Die Maschenweite bzw. das Raster des netzförmigen Musters ist der mittlere Abstand, den zwei durch eine Linie verbundene benachbarte Schnittpunkte zueinander einnehmen. Im Falle von netzförmigen Mustern, die aus zwei sich schneidenden Linienscharen parallelen Linien gebildet werden, ist die Maschenweite der mittlere Abstand der parallelen Linien zueinander, wobei als Abstand der Abstand von Mitte zu Mitte zweier benachbarter Linien (Streifen) zu Grunde gelegt wird.

Das Verhältnis von Linienbreite zu Maschenweite liegt vorzugsweise im Bereich von 1:3 bis 1:15 und insbesondere im Bereich von 1:5 bis 1:10.

Zur Erzeugung der erfindungsgemäßen Muster wird man die Polymerzusammensetzung in der Regel in einer Menge von wenigstens 5 g/m², vorzugsweise von 5 bis 50 g/m² und insbesondere 10 bis 40 g/m² und speziell 10 bis 30 g/m² Trockenauflage, d. h. bezogen auf die Feststoffe der Zusammensetzung, auf den flächigen Träger aufbringen. Der Anteil an Pulver P liegt vorzugsweise im Bereich von 2 bis 25 g/m², insbesondere im Bereich von 5 bis 20 g/m².

Für die elektrischen Eigenschaften ist das Pulver P von Bedeutung. Hierbei handelt es sich um ein feinteiliges Material mit einer Kem-Schale-Morphologie. Kern-Schale-Morphologie bzw. Kern-Schale-Struktur bedeutet, dass die Pulverteilchen einen Kern und wenigstens eine auf dem Kern angeordnete Schale aufweisen, die aus einem Material besteht, das von dem Material, welches den Kern bildet, verschieden ist. Erfindungsgemäß wird zumindest die äußere Schale von einem Edelmetall oder einer Edelmetall-Legierung gebildet. Als Edelmetalle kommen grundsätzlich Gold und Silber und deren Legierungen mit legierbaren Metallen in Betracht. Der Edelmetallanteil beträgt üblicherweise wenigstens 50 Gew.-%, vorzugsweise wenigstens 70 Gew.-%. Als elektrisch leitfähiges Material hat sich insbesondere Silber oder eine Silber-haltige Legierung bewährt. In der Regel der Silberanteil in diesen Legierungen wenigstens 50 Gew.-%, insbesondere wenigstens 70 Gew.-%. Als weitere Metalle kommen Kupfer, Gold, Platinmetalle, Zink, Nickel oder andere mit Gold bzw. Silber Legierungen bildende Metalle in Betracht.

Der Kern kann grundsätzlich aus einem beliebigen Material bestehen, dass von einem Edelmetall oder einer Edelmetall-Legierung verschieden ist. In einer bevorzugten Ausführungsform der Erfindung besteht der Kern aus einem Material, das elektrischen Strom nicht leitet. Hierzu zählen beispielsweise oxidische Materialien, z. B. keramische Materialien, Kunststoffe und insbesondere Glas. Als Gläser sind übliche Alkali- und Erdalkalisilicat-Gläser sowie Borosilikat-Gläser Aluminosilikat-Gläser, Borat-Gläser, Germanat-Gläser, Phosphat-Gläser und dergleichen geeignet. Der Kern kann massiv sein oder als Hohlkörperkugel vorliegen. Als Pulver P sind grundsätzlich auch Metallpulver mit einer Edelmetallbeschichtung geeignet, d. h. der Kem derartiger Pulver ist ein Nicht-Edelmetall, z. B. Kupfer, Zink. Nickel, Eisen und dergleichen oder eine Legierung, die überwiegend aus diesen Nichtedelmetallen besteht. Bevorzugt werden allerdings Pulver, deren Kern aus einem nicht elektrisch leitfähigen Material besteht, sowie Mischungen derartiger Pulver mit Metallpulver, das eine Edelmetallbeschichtung aufweist.

Vorzugsweise weist der Kern, und damit auch die Pulverteilchen, eine regelmäßige Gestalt, z. B. eine kugelförmige oder ellipsoide Gestalt, auf, wobei das Verhältnis von größtem zu kleinstem Durchmesser einen Wert von 5:1, insbesondere 2:1 nicht überschreitet.

Die Pulverteilchen P weisen in der Regel einen mittleren Durchmesser von 1 bis 150 µm, häufig 1 bis 100 µm, vorzugsweise 2 bis 70 µm, insbesondere 5 bis 50 µm, besonders bevorzugt 10 bis 40 µm und ganz besonders bevorzugt 10 bis 30 µm auf. In einer speziellen Ausführungsform liegt er im Bereich von 10 bis 20 µm. Vorzugsweise weisen die Teilchen einen D₁₀-Wert nicht unterhalb 2 µm und insbesondere im Bereich von 4 µm bis 25 µm auf. Der D₉₀-Wert der Pulverteilchen wird vorzugsweise einen Wert von 100 µm und insbesondere von 70 µm nicht überschreiten und liegt insbesondere im Bereich von 15 µm bis 60 µm. Unter dem D₁₀-Wert bzw. dem D₉₀-Wert versteht der Fachmann den Teilchendurchmesser, den 10 bzw. 90 Gew.-% der Pulverteilchen unterschreiten. Dementsprechend bezieht sich hier der mittlere Teilchendurchmesser auf das Gewichtsmittel, und entspricht folglich dem Durchmesser, den 50 Gew.-% der Teilchen über- bzw. unterschreiten.

Der Gewichtsanteil an Edelmetall bzw. Edelmetall-Legierung in dem Pulver P beträgt in der Regel wenigstens 3 Gew.-% und vorzugsweise wenigstens 5 Gew.-% und wird in der Regel einen Wert von 70 Gew.-% und insbesondere 50 Gew.-%. jeweils bezogen auf das Gesamtgewicht des Pulvers, nicht überschreiten. Insbesondere liegt er im Bereich von 10 bis 40 Gew.-% und besonders bevorzugt im Bereich von 15 bis 35 Gew.-%.

Die erfindungsgemäß verwendeten Pulver P sind bekannt und im Handel erhältlich. Geeignete elektrisch leitfähige Pulver P mit einem Kern aus elektrisch nicht leitfähigen Material werden beispielsweise unter dem Handelsbezeichnung Conduct-O-Fil® Silver Coated Hollow Glass Spheres (Glashohlkugel, Borosilikatglas, 20 bis 33 ± 2 % Silber), z. B. die Typen SH230S33, SH400S33, SH400S33; Conduct-O-Fil® Silver Coated Glass Spheres (Glasvollkugel, 4 bis 20± 2 % Silber), z. B. die Typen S-2429-S, S-3000-S, S-3000-S2E, S-3000-S2M, S-3000-S3E, S-3000-S3M, S-3000-S3N, S-3000-S4M, S-4000-S3, S-5000-S2, S-5000-S3, S-2429-S, S-2429-S, S-2429-S, und Conduct-O-Fil® Silver Coated Hollow Ceramic Additive (Keramikhohlkugel, 16 bis 30 ± 2 % Silber), z. B. die Typen AG-SL 150-16-TRD und AG-SL 150-30-TRD, von der Firma Potters Industries Inc. Valley Forge, PA USA bzw. von der Firma Potters-Ballotini, Kirchheim-Bolanden/Deutschland, vertrieben.

Bei dem versilberten Metallpulver handelt es sich insbesondere um versilbertes Kupferpulver, z. B. um versilberte Kupferblättchen, vorzugsweise mit einer Größe im Bereich von 1 bis 100 µm. Der Silberanteil beträgt in der Regel 1 bis 50 Gew.-%, z. B. 5 bis 25 Gew.-%, bezogen auf das Metallpulver. Versilberte Metallpulver, insbesondere versilbertes Cu-Pulver, z. B. in Form versilberter Metallblättchen, sind bekannt und werden z. B. unter der Bezeichnung KONTAKTARGAN® von der Fa. Eckart, Fürth/Deutschland, vertrieben.

In einer ersten Ausführungsform umfasst die wässrige Polymerzusammensetzung als Komponente ii) ausschließlich (d. h. zu mindestens 99 %, bezogen auf das Gesamtgewicht der Komponente ii)) wenigstens ein Pulver P mit einem Kern aus elektrisch nicht leitfähigen Material. In einer ganz bevorzugten Ausführungsform werden als Pulver P mit Silber beschichte Glashohlkugeln mit einem Silbergehalt im Bereich von 15 bis 35 Gew.-% und einem mittleren Teilchendurchmesser im Bereich von 10 bis 20 µm eingesetzt. In einer weiteren bevorzugten Ausführungsform werden als Pulver P mit Silber beschichte Glasvollkugeln mit einem Silbergehalt im Bereich von 4 bis 20 Gew.-% und einem mittleren Teilchendurchmesser im Bereich von 10 bis 40 µm eingesetzt.

In einer anderen bevorzugten Ausführungsform wird als Pulver P eine Mischung eines Pulvers mit einem Kern aus elektrisch nicht leitendem Material, z. B. die Silber beschichteten Glashohlkugeln, und ein Metallpulver mit Edelmetallbeschichtung, z. B. das hier beschriebene versilberte Kupferpulver, eingesetzt. Das Gewichtsverhältnis von Metallpulver mit Edelmetallbeschichtung zu dem Pulver mit elektrisch nicht leitfähigen Kernmaterial liegt dann vorzugsweise im Bereich von 5:1 bis 1:5 und insbesondere im Bereich von 5:2 bis 1:5.

Die Mitverwendung von anderen feinteiligen, elektrisch leitfähigen Materialien EM, z. B. Metallpulver, wie Kupferpulver oder Zinkpulver, Rußpulver, elektrisch leitfähige Polymere, z. B. Polythiophene, Polypyrrole und dergleichen oder Polythiophen/Polystyrolsulfonat-Mischungen, oder Kohlefasern, wie sie üblicherweise zur Antistatik-Ausrüstung von Oberflächen eingesetzt werden, ist grundsätzlich möglich. Der Anteil an derartigen Materialien wird in der Regel 30 Gew.-%, und insbesondere 20 Gew.-%, bezogen auf das Pulver P nicht überschreiten. Bevorzugt ist die Mitverwendung von elektrisch leitfähigen Polymeren, z. B. in einer Menge von 0,5 bis 20 Gew.-%, bezogen auf die Komponente ii), z. B. Polythiophene, Polypyrrole und dergleichen oder Polythiophen/Polystyrolsulfonat-Mischungen. Beispiele für derartige Polymere sind insbesondere Poly(3,4-(ethylendioxy)thiophen)/Polystyrolsulfonat, das unter der Handelsbezeichnung Baytron® P von der Fa. Bayer AG, Leverkusen/Deutschland, vertrieben wird.

Weiterhin enthalten die erfindungsgemäßen Zusammensetzungen wenigstens ein filmbildendes Polymer, Hierunter versteht man ein Polymer, das beim Trocknen der wässrigen Zusammensetzung, gegebenenfalls bei erhöhter Temperatur, einen Film auf einer Oberfläche zu bilden vermag. Das Polymer hat die Rolle eines Bindemittels und führt zu einer Haftung des Pulvers P auf der Oberfläche des Trägers. Bei dem Polymer kann es sich um ein in der wässrigen Zusammensetzung gelöstes Polymer handeln. Bevorzugt werden jedoch wässrige Dispersionen feinteiliger Polymerer P verwendet. Die Partikelgröße der Polymerteilchen in diesen Dispersionen liegt in der Regel im Bereich von etwa 10 bis 2000 nm, häufig im Bereich von 20 bis etwa 1500 nm und insbesondere im Bereich von 50 bis 1000 nm.

Das Gewichtsverhältnis von polymerem Bindemittel B zu Pulver P liegt dabei vorzugsweise im Bereich von 1:1,1 bis 1:20, insbesondere im Bereich von 1:1,2 bis 1:15, besonders bevorzugt im Bereich 1:1,4 bis 1:8 und ganz besonders bevorzugt 1:1,5 bis 1:5.

Es ist bevorzugt, wenn das filmbildende Polymer eine Glasübergangstemperatur T_{G} im Bereich von -40 bis 100 °C, vorzugsweise -20 bis +60 °C, insbesondere -10 bis +40 °C, aufweist. Sofern das polymere Bindemittel mehrere Polymerkomponenten umfasst sollte zumindest der Hauptbestandteil eine Glasübergangstemperatur in diesem Bereich aufweisen. Insbesondere liegt die Glasübergangstemperatur des Hauptbestandteils im Bereich von -20 °C bis +60 °C und besonders bevorzugt im Bereich von -10 °C bis +40 °C. Vorzugsweise weisen alle polymeren Bindemittelkomponenten eine Glasübergangstemperatur in diesen Bereichen auf. Bei zu niedriger Glasübergangstemperatur besteht die Gefahr, dass die Oberfläche klebrig ist. Die angegebenen Glasübergangstemperaturen beziehen sich dabei auf die gemäß ASTM-D 3418-82 mittels DSC bestimmte "midpoint temperature". Im Falle vernetzbare Bindemittel bezieht sich die Glasübergangstemperatur auf den unvernetzten Zustand.

Beispiele für geeignete filmbildende Polymere basieren auf den folgenden Polymerklassen:
(1) Polyurethan-Harze
(2) Acrylatharze (Reinacrylate: Copolymere aus Alkylacrylaten und Alkylmethacrylaten);
(3) Styrolacrylate (Copolymere aus Styrol und Alkylacrylaten);
(4) Styrol/Butadien-Copolymerisate;
(5) Polyvinylester, insbesondere Polyvinylacetate und Copolymere des Vinylacetats mit Vinylpropionat;
(6) Vinylester-Olefin-Copolymere, z. B. Vinylacetat/Ethylen-Copolymere;
(7) Vinylester-Acrylat-Copolymere, z. B. Vinylacetat/Alkylacrylat-Copolymere sowie Vinylacetat/Alkylacrylat/Ethylen-Terpolymere;
(8) Silikonkautschuke (Polysiloxane)

Derartige Polymere sind bekannt und im Handel erhältlich, z. B. Polymere der Klassen (2) bis (7) in Form wässriger Dispersionen unter den Bezeichnungen ACRONAL, STYROFAN, BUTOFAN (BASF-AG), MOWILITH, MOWIPLUS, APPRETAN (Clariant), VINNAPAS, VINNOL (WACKER). Wässrige, für das erfindungsgemäßen Verfahren geeignete Polyurethan-Dispersionen (1) sind insbesondere solche, die für die Beschichtung von Textilien verwendet werden (siehe z. B. J. Hemmrich, Int. Text. Bull. 39, 1993, Nr.2, S. 53-56; "Wässrige Polyurethan-Beschichtungssysteme" ChemiefasernlTextilind. 39 91 (1989) T149, T150; W. Schröer, Textilveredelung 22, 1987, S. 459-467). Wässrige Polyurethandispersionen sind im Handel erhältlich, z.B. unter den Handelsbezeichnungen Alberdingk® der Fa. Alberdingk, Impranil® der Fa. BAYER AG, Permutex® der Fa. Stahl, Waalwijk, Niederlande, der Fa. BASF Aktiengesellschaft öder können nach bekannten Verfahren hergestellt werden, wie sie beispielsweise in "Herstellverfahren für Polyurethane" in Houben-Weyl, "Methoden der organischen Chemie", Band E 20/Makromolekulare Stoffe, S. 1587, D. Dietrich et al., Angew. Chem. 82 (1970), S. 53 ff., Angew. Makrom. Chem. 76, 1972, 85 ff. und Angew. Makrom. Chem. 98, 1981, 133-165, Progress in Organic Coatings, 9, 1981, S. 281-240, bzw. Römpp Chemielexikon, 9. Auflage, Band 5, S. 3575 beschrieben werden.

Die Bindemittel können selbstvemetzend sein, d. h. die Polymere weisen funktionelle Gruppen (vernetzbare Gruppen) auf, die beim Trocknen der Zusammensetzung, gegebenenfalls beim Erwärmen, miteinander oder mit einem niedermolekularen Vernetzer unter Bindungsbildung reagieren.

Beispiele für vernetzbare funktionelle Gruppen umfassen aliphatisch gebundene OH-Gruppen, NH-CH₂OH-Gruppen, Carboxylat-Gruppen, Anhydrid-Gruppen, verkappte Isocyanatgruppen und Aminogruppen. Häufig wird man ein Polymer verwenden, dass noch freie OH-Gruppen als reaktive Gruppen aufweist. In der Regel beträgt der Anteil der reaktiven funktionellen Gruppen 0,1 bis 3 mol/kg Polymer. Die Vernetzung kann innerhalb des Polymers durch Reaktion komplementär-reaktiver funktioneller Gruppen bewirkt werden. Vorzugsweise bewirkt man die Vernetzung des Polymers durch Zugabe eines Vernetzers, der reaktive Gruppen aufweist, welche hinsichtlich ihrer Reaktivität zu den funktionellen Gruppen des Vernetzers komplementär sind. Geeignete Paare funktioneller Gruppen, die eine komplementäre Reaktivität aufweisen sind dem Fachmann bekannt. Beispiele für solche Paare sind OH/COOH, OH/NCO, NH₂/COOH, NH₂/NCO sowie M²⁺/COOH, wobei M²⁺ für ein zweiwertiges Metallion wie Zn²⁺, Ca²⁴, oder Mg²⁺ steht. Beispiele für geeignete Vernetzer sind die nachstehend bei den Polyurethanen genannten Di- oder Polyole; primäre oder sekundäre Diamine, vorzugsweise primäre Diamine, z. B. Alkylendiamine wie Hexamethylendiamin, Diethylentriamin, Triethylentetramin, Tetraethylenpentamin, N,N-Bis[(aminopropyl)amino]-ethan, 3,6-Dioxaoctandiamin, 3,7-Dioxanonandiamin, 3,6,9-Trioxaundecandiamin oder Jeffamine, (4,4'-Diaminodicyclohexyl)methan (4,4'-Diamino-3,3-dimethyldicyclohexyl)methan; Aminoalkohole wie Ethanolamin, Hydroxypropylamin; ethoxilierte Di- und Oligoamine; Dihydrazide von aliphatischen oder aromatischen Dicarbonsäuren wie Adipinsäuredihydrazid; Dialdehyde wie Glyoxal; teilweise oder vollständig O-methylierte Melamine, sowie Verbindungen oder Oligomere, die im Mittel zwei oder mehr, vorzugsweise drei oder mehr Isocyanatgruppen oder reversibel blockierte Isocyanatgruppen aufweisen. In diesem Fall wird das Mengenverhältnis von Vernetzer zu polymerem Bindemittel so bemessen, dass das Molverhältnis der reaktiven Gruppen im polymeren Bindemittel (Gesamtmenge der reaktiven Gruppen in den Polymeren) zu den reaktiven Gruppen im Vernetzer in der Regel im Bereich von 1:10 bis 10:1 und vorzugsweise im Bereich von 3:1 bis 1:3 liegt. Üblicherweise liegt das Gewichtsverhältnis von polymeren Bindemittel (gerechnet als Feststoff) zu Vernetzer im Bereich von 100:1 bis 1:1 und insbesondere im Bereich von 50:1 bis 5:1.

Erfindungsgemäß werden Bindemittel B bevorzugt, die wenigstens 50 Gew.-% Polyurethane, bezogen auf das Gesamtgewicht an Bindemittelpolymeren in der Zusammensetzung, umfassen. Der Polyurethan-Anteil bewirkt die mechanische Stabilität, insbesondere die Abriebfestigkeit der erfindungsgemäßen Beschichtung. Sofern das Flächengebilde flexibel sein soll, wählt man vorzugsweise unvernetzte polymere Bindemittel oder polymere Bindemittel mit einem geringen Vernetzungbarkeit; wünscht man hingegen eine eher starre Formgebung, so wird man vorzugsweise höher vernetzbare polymere Bindemittel verwenden.

Bei den Polyurethanen handelt es sich bekanntermaßen um Additionsprodukte aus wenigstens einer Polyisocyanat-Komponente und wenigstens einer Polyol-Komponente. Die Polyisocyanat-Komponente umfasst in der Regel wenigstens ein Diisocyanat. Darüber hinaus kann die Isocyanat-Komponente auch höherfunktionelle Isocyanate, z. B. Triisocyante oder oligomere Isocyanate, die im Mittel mehr als zwei und vorzugsweise drei oder mehr Isocyanatgruppen aufweisen, umfassen. Die Polyolkomponente umfasst in der Regel wenigstens ein Diol. Die Polyolkomponente kann auch höherfunktionelle Polyole oder oligomere Polyole mit im Mittel mehr als zwei OH-Gruppen, vorzugsweise drei, vier und mehr OH-Gruppen umfassen.

Geeignete Diisocyanate sind aromatische Diisocyanate wie 2,4- und 2,6-Toluylendiisocyanat (TDI) und Isomerengemische davon, Tetramethylxylendüsocyanat (TMXDI), Xylendiisocyanat (XDI), Diphenylmethan-4,4'-diisocyanat (MDI), sowie aliphatische und cycloaliphatische Diisocyanate, wie Dicylohexylmethan-4,4'-diisocyanat (H₁₂MDI), Tetramethylendiisocyanat, Hexamethylendiisocyanat (HMDI), Isophorondiisocyanat (IPDI), Trimethylhexamethylendüsocyanat sowie Gemische davon. Zu den bevorzugten Diisocyanaten zählen Hexamethylendiisocyanat (HMDI) und Isophorondiisocyanat. Beispiele für höherfunktionelle Isocyanate sind Triisocyanate wie Triphenylmethan-4,4',4"-triisocyanat, die partielle Kondensationsprodukte der obengenannten Diisocyanate wie die Cyanurate und Biurethe der vorgenannten Diisocyanate sowie Oligomere, die durch gezielte Reaktion von Diisocyanaten oder von semiblockierten Diisocyanaten mit Polyolen, welche im Mittel mehr als zwei und vorzugsweise wenigstens drei OH-Gruppen je Molekül aufweisen, erhältlich sind.

Bevorzugte Polyisocyanate sind aliphatischer oder cycloaliphatischer Natur. Insbesondere sind Diisocyanate der allgemeinen Formel

OCN-(CH₂)ₙ-NCO

mit n = 2 bis 8, insbesondere 4 bis 6 bevorzugt. Der Anteil an Polyisocyanat-Komponente an den Bestandteilen, welche das Polyurethan bilden liegt in der Regel im Bereich von 5 bis 60 Gew.-%, insbesondere im Bereich von 10 bis 40 Gew.-%.

Als Polyolkomponente kommen grundsätzlich niedermolekulare Alkohole mit zwei oder mehr, z. B. drei oder vier OH-Gruppen sowie oligomere Polyole in Betracht, die im Mittel wenigstens zwei, vorzugsweise zwei bis vier und insbesondere zwei oder drei OH-Gruppen aufweisen, welche insbesondere an ihren Termini angeordnet sind.

Geeignete niedermolekulare Alkohole sind insbesondere Glykole mit vorzugsweise 2 bis 25 Kohlenstoffatomen. Hierzu zählen 1,2-Ethandiol, 1,2-Propandiol, 1,3-Propandiol, 1,4-Butandiol, 1,5-Pentandiol, 1,6-Hexandiol, 1,10-Decandiol, Diethylenglykol, Triethylenglykol, Dipropylenglykol, Tripropylenglykol, 2,2,4-Trimethylpentandiol-1,5, 2,2-Dimethylpropandiol-1,3, 1,4-Dimethylolcyclohexan, 1,6-Dimethylolcyclohexan, 2,2-Bis(4-hydroxyphenyl)-propan (Bisphenol A), 2,2-Bis(4-hydroxyphenyl)butan (Bisphenol B) oder 1,1-Bis(4-hydroxyphenyl)-3,3,5-trimethylcyclohexan (Bisphenol C).

Weitere mögliche Bestandteile der Polyol-Komponente sind dreiwertige (Triole) und höherwertige, niedermolekulare Alkohole. Sie weisen in der Regel 3 bis 25, vorzugsweise 3 bis 18 Kohlenstoffatome auf. Hierzu zählen Glycerin, Trimethylolethan, Trimethylolpropan, Erythrit, Pentaerythrit, Sorbit und deren Alkoxylate.

Beispiele für oligomere Polyole sind Polyesterpolyole, Polycarbonatpolyole und Polyetherpolyole. Das zahlenmittlere Molekulargewicht dieser Komponente liegt vorzugsweise im Bereich von 500 bis 20000 Dalton, vorzugsweise 1000 bis 10000 Dalton. Bevorzugt ist die oligomere Komponente aus aliphatischen Bausteinen aufgebaut.

Der Anteil oligomerer Polyole an den das Polyurethan bildenden Komponenten liegt in der Regel im Bereich von 10 bis 95 Gew.-%, vorzugsweise 20 bis 95 Gew.-% und insbesondere 25 bis 85 Gew.-% bezogen auf das Gesamtgewicht der das Polyurethanbildenden Komponenten. Der Anteil an niedermolekularen Alkoholen beträgt in der Regel nicht mehr als 60 Gew.-% , z.B. 1 bis 60 Gew.-%, und häufig bis 30 Gew.-% oder bis 20 Gew.-%.

Da die Polyurethane erfindungsgemäß in Form einer wässrigen Dispersion eingesetzt werden, weisen sie in der Regel polare funktionelle Gruppen auf, insbesondere ionogene und/oder ionischen Gruppen z. B. anionische bzw. anionogene Gruppen wie. Carbonsäuregruppen, Sulfonsäuregruppen, Phosphonsäuregruppen, Phosphorsäuregruppen, die auch in ihrer Salz-Form z. B. als Alkalimetall- und Ammoniumsalze vorliegen können; kationische bzw. kationogene Gruppen wie Aminogruppen, quaternäre Aminogruppen; und/oder neutrale wasserlösliche Gruppen wie Polyethergruppen, vorzugsweise Polyethylenoxid-Gruppen.

Bevorzugte Polyurethane sind solche, die aliphatische Polyetherketten (vorzugsweise linear oder einfach verzweigt), insbesondere Poly-C₂-C₄-alkylenoxid-Kelten aufweisen. Diese sind naturgemäß dadurch erhältlich, dass man bei der Herstellung der Polyurethane aliphatische Polyetherpolyole einsetzt. Der Anteil an Polyetherketten in Polyetherurethanen beträgt vorzugsweise 5 bis 80 Gew.-% und insbesondere 10 bis 50 Gew.-% der Gesamtmasse des Polyurethans. Bevorzugte Polyurethane sind weiterhin aliphatische Polyesterurethane, d. h. Polyurethane, die aliphatische Polyesterketten (vorzugsweise linear oder einfach verzweigt) aufweisen und die dadurch erhältlich sind, dass man die obengenannten aliphatischen Polyesterpolyole bei der Herstellung der Polyurethane einsetzt. Der Anteil an Polyesterketten beträgt vorzugsweise 5 bis 80 Gew.-% und insbesondere 10 bis 70 Gew.-% der Gesamtmasse des Polyurethans. Bevorzugte Polyurethane sind weiterhin aliphatische Polycarbonaturethane, d. h. Polyurethane, die aliphatische Polcarbonatketten (vorzugsweise linear oder einfach verzweigt) aufweisen und die dadurch erhältlich sind, dass man die oben genannten aliphatischen Polycarbonatpolyole bei der Herstellung der Polyurethane einsetzt. Der Anteil an Polycarbonatketten beträgt vorzugsweise 5 bis 80 Gew.-% und insbesondere 10 bis 70 Gew.-% der Gesamtmasse des Polyurethans.

Neben den vorgenannten Bestandteilen i. und ii. können die Beschichtungen übliche Hilfsmittel enthalten, wie sie bei konventionellen Beschichtungszusammensetzungen für flächige flexible Träger, wie Textilien und Leder eingesetzt werden. Art und Menge dieser Hilfsmittel richtet sich an sich bekannter Weise nach den zu beschichtenden Trägermaterialien und nach den eingesetzten Beschichtungsverfahren. Zu den Hilfsmitteln zählen UV-Stabilisatoren, Dispergierhilfsmittel, oberflächenaktive Substanzen, Verdicker, Entschäumer oder schaumbildende Mittel, Schaumstabilisatoren, Mittel zur Einstellung des pH-Wertes, Antioxidantien, Katalysatoren für die Nachvernetzung, übliche Hydrophobiermittel sowie Konservierungsmittel, wobei diese Hilfsmittel-Klassen nicht in allen Fällen streng voneinander zu Trennen sind, z. B. im Falle von oberflächenaktiven Substanzen und Schaumbildnern bzw. Schaumstabilisatoren. In der Regel wird die Gesamtmenge der üblichen Hilfsmittel einen Wert von 10 Gew.-%, bezogen auf das Gesamtgewicht der Zusammensetzung, nicht überschreiten.

Gegebenenfalls enthalten die erfindungsgemäßen Zusammensetzungen Farbmittel. Bevorzugte Farbmittel sind anorganische und organische Pigmente. Diese sind im Handel als Pulver sowie als feste oder flüssige Pigmentpräparation erhältlich. Gegebenenfalls verwendet man als Farbmittel auch Pigmentgemische. Vorzugsweise haben die Pigmentteilchen eine Teilchengröße ≤ 5 µm. Der Pigmentanteil in den wässrigen Polymerzusammensetzungen wird in der Regel 20 Gew.-%, bezogen auf das Gesamtgewicht der Zusammensetzung, bzw. 50 G ew.-Teile auf 100 Gew.-Teile polymeres Bindemittel nicht überschreiten und liegt z. B. im Bereich von 2 bis 20 Gew.-%, bezogen auf das Gewicht der Zusammensetzung bzw. 5 bis 50 Gew.-Teile bezogen auf 100 Gew.-Teile Bindemittelpolymer. Beispiele für Pigmente sind insbesondere Weißpigmente wie TiO₂ und Farbpigmente auf Basis von Eisenoxid. Geeignet sind aber auch organische Pigmente.

Mittel zur Einstellung des pH-Wertes sind die üblicherweise verwendeten anorganischen oder organischen Basen, beispielsweise Ammoniak, Alkalimetallbasen wie Kalium- und Natriumhydroxid, Natriumhydrogencarbonat, Natriumcarbonat, Kaliumcarbonat, Kaliumhydrogencarbonat, Erdalkalimetallbasen wie Calciumhydroxid, Calciumoxid, Magnesiumhydroxid oder Magnesiumcarbonat, Alkylamine, wie Ethylamin, Diethylamin, Trimethylamin, Triethylamin, Triisopropylamin und Mono-, Di- und Trialkanolamine wie Ethanolamin, Diethanolamin, Aminomethylpropanol, Aminomethylpropandiol und Trishydroxymethylaminomethan sowie Gemische davon.

Geeignete oberflächenaktive Substanzen sind die üblicherweise zur Herstellung wässriger Polymerdispersionen verwendeten Emulgatoren, Polymertenside und Schutzkolloide. Die Emulgatoren können amphoter, neutraler, anionischer oder kationischer Natur sein. Geeignete Emulgatoren sind dem Fachmann aus dem Stand der Technik bekannt, z. B. aus R. Heusch, "Emulsiones" in Ullmanns Encyclopedia of Industrial Chemistry, 5th ed. on CD-Rom, Kapitel 7. Beispiele für nicht-ionische Emulgatoren sind alkoxylierte Fette und Öle, z. B. Maisölethoxylate, Rizinusölethoxylate, Talgfettethoxylate; Glycerinester, z. B. Glycerinmonostearat; Fettalkoholalkoxylate und Oxoalkoholalkoxylate; Alkylphenolalkoxylate, z. B. lsononylphenolethoxylate; und Zuckertenside, z. B. Sorbitanfettsäureester (Sorbitanmonooleat, Sorbitantristearat), Polyoxyethylensorbitanfettsäureester. Insbesondere verwendet man Fettalkoholethoxylate. Beispiele für geeignete anionische Emulgatoren sind Seifen, Alkansulfonate, Olefinsulfonate, Alkylarylsulfonate, Alkylnaphthalinsulfonate, Sulfosuccinate, Alkylsulfate und Alkylethersulfate, Alkylmethylestersulfonate sowie Gemische davon, vorzugsweise in Form der Natriumsalze. Beispiele für Polymertenside sind: Blockcopolymere wie Polyethylenoxid-blockpolypropylenoxid. Polystyrol-blockpolyethylenoxid, und AB-Kammpolymere, z. B. Polymethacryl-comb-polyethylenoxid und Copolymerisate von Acrylsäure und Maleinsäureanhydrid, insbesondere Copolymerisate von Acrylsäure und Maleinsäureanhydrid, vorzugsweise in neutralisierter Form, z. B. in Form der Natrium- oder der Ammoniumsalze. Geeignete Schutzkolloide sind beispielsweise Celluloseether, wie Carboxymethylcellulose, Methylcellulose, Hydroxyethylcellulose, Gummi arabicum, Polyvinylalkohole und Polyvinylpyrrolidon. Der Anteil an oberflächenaktiven Substanzen, bezogen auf das Gesamtgewicht der Polymerbestandteile der Beschichtung, liegt in der Regel im Bereich von 0 bis 10 Gew.-%, vorzugsweise 0,1 bis 5 Gew.-%, bezogen auf das Gesamtgewicht der Zubereitung.

Geeignete Entschäumer sind beispielsweise höhere Alkohole, nichtionogene Acetylenverbindungen, aliphatische Kohlenwasserstoffe mit nichtionogenen Bestandteilen sowie Oligosiloxane.

Beispiele für Schaumbildner sind die Salze, insbesondere die Alkalimetall- und Ammoniumsalze von Alkylsulfaten und von Dialkylsulfobernsteinsäureestern. Beispiele für Schaumstabilisatoren sind insbesondere Fettsäuresalze.

Geeignete Verdicker sind neben den vorgenannten Schutzkolloiden auch Gummi arabicum, Gelatine, Caseine, Stärke, Alginate, Polyether, Cellulose-Derivate wie Methyl-, Carboxymethylcellulose oder Hydroxyethyl- u. Propylcellulose, Polyacrylsäure-Salze, wie das Natriumsalz oder das Ammoniumsalz der Polyacrylsäure, hydrophob modifizierte Polyurethane (Assoziativverdicker) sowie anorganische Verdickungsmittel wie Kieselsäure, sowie Gemische davon. Die Menge an Verdickungsmittel hängt naturgemäß von der gewünschten Rheologie der zur Beschichtung eingesetzten Beschichtungszusammensetzung ab und kann daher über einen weiten Bereich schwanken.

Erfindungsgemäß werden wässrige Polymerzusammensetzungen eingesetzt, d. h. die Polymerzusammensetzungen enthalten neben den vorgenannten Bestandteilen noch Wasser oder eine Mischung aus Wasser mit organischen Lösungsmitteln, welche in Wasser löslich, bzw. mit Wasser mischbar sind. Die Menge an wässrigem Medium wird in der Regel so bemessen, dass die resultierende wässrige Zusammensetzung einen Feststoffgehalt von 10 bis 80 Gew.-% und vorzugsweise etwa 20 bis 80 Gew.-% aufweist, wobei der Feststoffgehalt in an sich bekannter Weise von dem jeweiligen Beschichtungsverfahren abhängt.

Das wässrige Dispergiermedium ist Wasser oder Mischungen, die wenigstens 50 Vol.-%, vorzugsweise wenigstens 80 Vol.-% Wasser und ein mit Wasser mischbares organisches Lösungsmittel enthalten. Geeignete Lösungsmittel umfassen Ketone wie Aceton und Methylethylketon, mit Wasser mischbare Ether wie Tetrahydrofuran, Dioxan, 1,2-Priopandiol-1-n-propylether, 1,2-Butandiol-1-methylether, Ethylenglykolmonomethylether, Diethylenglykolmonomethylether, Diethylenglykoldimethylether, Mono- oder Polyalkohole wie Methanol, Ethanol, n-Propanol, Isopropanol, Glykol, Glycerin, Propylenglykol oder Polyethylenglykol, sowie Gemische davon. Bevorzugt ist Wasser alleiniges Dispergiermedium (Wasseranteil > 95 Vol.-%).

Zur Herstellung der erfindungsgemäß verwendeten Zusammensetzungen wird man in der Regel eine wässrige Lösung oder Dispersion des bzw. der polymeren Bindemittel mit dem Pulver P, gegebenenfalls unter Zusatz der oben angegebenen, Farbmittel, und Hilfsmittel und gegebenenfalls weiterem wässrigem Medium vermischen. Häufig wird man zunächst eine wässrige Dispersion des polymeren Bindemittels, welche das Pulver P sowie gegebenenfalls Entschäumer und Verdicker enthält, durch Vermischen der Bestandteile herstellen und das dabei erhaltene Compound vor dem Beschichten des flächigen Trägers, sofern erforderlich, mit den Farbmitteln und den sonstigen Hilfsmitteln konfektionieren. Das Vermischen und Konfektionieren erfolgt in den hierfür üblichen Vorrichtungen, z. B. in Rührgefäßen oder einem Dissolver.

Die Herstellung des erfindungsgemäßen Musters auf der Oberfläche des Trägers erfolgt nach bekannten Verfahren zum Beschichten flächiger Träger, insbesondere durch ein Druckverfahren (Drucktechniken) einschließlich Siebdruck, Flachfilmdruck, Rotationsfilmdruck und Transferdruck. Derartige Drucktechniken sind dem Fachmann bekannt, z. B. aus H.K. Rouette, Lexikon für Textilveredlung, Laumannsche Verlagsgesellschaft Dülmen 1995, S. 436 ff., S 648 f., S. 1817-1821, S. 1823-1825 und S. 2221 f. Das jeweilige Druckverfahren und seine Ausgestaltung richtet sich in an sich bekannter Weise nach der Art des flächigen Trägers.

Bevorzugtes Druckverfahren für Textilien, insbesondere Gewebe, und für Leder sind das Rotationsfilmdruck- und Flachfilmdruckverfahren. Beide Verfahren können kontinuierlich als auch diskontinuierlich betrieben werden. Als Musterträger werden Rundschablonen bzw. Flachfilmdruckschablonen in den gewünschten Rapportgrößen und mit den gewünschten Farbdurchlässigkeiten. Derartige Schablonen sind kommerziell erhältlich, z.B. von der Fa. Stork, Niederlande. Zum Aufbringen des netzförmigen Musters auf den flächigen Träger wird in diesen Druckverfahren die wässrige, filmbildende Polymerzusammensetzung als Paste oder Schaum der Schablone zugeführt und mittels eines Rakels, z.B. eines Roll- oder Streichrakels durch die Öffnungen der Schablone auf den flächigen, gegebenenfalls vorbehandelten Träger mustermäßig aufgebracht. Anschließend wird die so aufgebrachte Zusammensetzung in der hier beschriebenen Weise verfestigt.

Insbesondere werden die wässrigen Polymerzusammensetzungen nach Zusatz von Schaummitteln und gegebenenfalls Schaumstabilisatoren als Schaum oder nach Zusatz von Verdickungsmitteln als Paste aufgetragen werden, wobei der Schaumauftrag erfindungsgemäß besonders bevorzugt ist. Der Schaumauftrag erfolgt mit den hierfür üblichen Vorrichtungen und Verfahren, z. B. mittels Rotationsschablonen.

Als konventionelle flächige Träger kommen beispielsweise textile Materialien wie Gewebe, Gestricke, Gewirke und Vliese, weiterhin Leder sowie Kunststofffolien in Betracht. Bevorzugte flächige Träger sind textile Gewebe und Leder.

Die textilen Materialen können aus Naturfasergarnen, Synthesefasergarnen und/oder Mischgarnen aufgebaut sein, wobei die Gewebe üblicherweise ein Flächengewicht im Bereich von 50 bis 400 g/m² vorzugsweise 80 bis 250 g/m² aufweisen. Als Fasermaterialien kommen grundsätzlich alle für die Herstellung von Textilien üblicherweise eingesetzten Fasermaterialien in Betracht. Hierzu zählen Baumwolle, Wolle, Hanffaser, Sisalfasem, Flachs, Ramie, Polyacrylnitrilfasern, Polyesterfasern, Polyamidfasern, Viskosefasern, Seide, Acetatfasern, Triacetatfasern, Aramidfasern und dergleichen sowie Mischungen dieser Fasermaterialien. Geeignet sind auch Glasfasern sowie Mischungen der vorgenannten Fasermaterialien mit Glasfasern z. B. Glasfaser/Kevlar-Mischungen.

Sofern die Zusammensetzung als Schaum appliziert wird, enthält die Zusammensetzung vorzugsweise Schaumbildner bzw. Schaumgeber und gegebenenfalls Schaumstabilisatoren. Der Anteil an Schaumbildnern beträgt in der Regel 0,2 bis 10 Gew.-% und insbesondere 0,5 bis 5 Gew.-%, bezogen auf das Gesamtgewicht der Zusammensetzung. Der Anteil an Schaumstabilisatoren liegt in der Regel im Bereich von 1 bis 5 Gew.-% und insbesondere 2 bis 4 Gew.-%, bezogen auf das Gesamtgewicht der Zusammensetzung. Das Schaumgewicht liegt in der Regel im Bereich von 100 bis 500 g/l und insbesondere im Bereich von 150 bis 400 g/l.

Vorzugsweise wird man in einem ersten Schritt die wässrige Polymerzusammensetzung auf den flexiblen flächigen Träger in Form eines netzförmigen Musters aufdrucken und anschließend die so erhaltene Beschichtung verfestigen.

Zum Verfestigen in Schritt b) des erfindungsgemäßen Verfahrens wird man nach dem Aufbringen der erfindungsgemäßen, wässrigen Beschichtungszusammensetzung zunächst das wässrige Medium entfernen, d. h. die feuchte Beschichtung trocknen. Das Trocknen erfolgt in der Regel unter Normaldruck bei Temperaturen oberhalb 50 °C, vorzugsweise im Bereich von etwa 70 bis 150 °C. Der Trockenvorgang nimmt in der Regel wenige Sekunden bis mehrere Minuten z. B. 20 Sekunden bis 5 Minuten in Anspruch, aber auch längere Trocknungszeiten sind möglich. Bevorzugt ist eine progressive Trocknung, d. h. die Trocknungstemperatur wird im Verlauf der Trocknung gesteigert, z. B. von einem Anfangswert von 50 bis 80 °C auf einen Endwert von 120 bis150 °C. Auf diese Weise werden besonders gute Qualitäten erhalten.

Beim Schaumauftrag wird in der Regel nach dem Trocknen der wässrigen Zusammensetzung die getrocknete Schaumschicht gecrasht. Das Crashen des Schaums erfolgt in der Regel durch Verpressen des mit dem Schaum beschichteten textilen Trägers bei einem Druck von wenigstens 2 bar, z. B. 2 bis 20 bar und vorzugsweise wenigstens 5 bar, z. B. 5 bis 15 bar. Vorzugsweise erfolgt das Auftragen, Trocknen und Verpressen in Linie, d. h. nacheinander in einem Gesamtvorgang.

Gegebenenfalls wird man den so erhaltenen Träger kalandrieren, um eine hinreichende Festigkeit der Beschichtung zu erhalten. Das Kalandrieren erfolgt in an sich bekannter Weise bei einem Walzendruck von wenigstens 5 bar, vorzugsweise wenigstens 10 Tonnen, z. B. 10 bis 25 Tonnen und Temperaturen im Bereich von vorzugsweise 25 bis 150°C. Sofern im Anschluss an das Aufbringen der Beschichtung ein Verpressen (vorzugsweise ein Verpressen in Linie) erfolgt, ist eine Kalandrierpassage zur Erreichung des erfindungsgemäßem Erfolgs nicht erforderlich aber von Vorteil.

Sofern das Bindemittel ein vernetzbares oder selbstvernetzendes Bindemittelpolymer enthält, umfasst das Verfestigen auch das Härten der aufgebrachten Zusammensetzung. Das Härten, das auch als Kondensationsschritt bzw. Kondensieren bezeichnet wird, erfolgt naturgemäß oberhalb der Vernetzungstemperatur des polymeren Bindemittels. Zur Vernetzung wird man in der Regel Temperaturen oberhalb 140 °C und insbesondere oberhalb 150 °C anwenden, häufig im Bereich von 150 °C bis 200 °C und speziell im Bereich von 150 bis 18 °C. Die Kondensationsdauer liegt üblicherweise im Bereich von 1 min. bis 5 min. Trocknung und Kondensation können gleichzeitig oder vorzugsweise nacheinander ausgeführt werden.

Gegebenenfalls wird man den Träger vor dem erfindungsgemäßen Aufbringen der wässrigen Polymerzusammensetzung vorbehandeln, z. B. indem man eine wässrige Polymerzusammensetzung, welche wenigstens eines der hier beschriebenen Bindemittelpolymere sowie gegebenenfalls die hier genannten Hilfsmittel enthält, die jedoch kein Pulver P enthält, auf den flächigen Träger in an sich bekannter Weise, z. B. durch Sprühen, Drucken, Streichen, Pflatschen oder Rakeln gleichmäßig aufbringt und zu einer Beschichtung in der hier beschriebenen Weise verfestigt. Der Auftrag kann auch aus langer Flotte erfolgen in einem diskontinuierlichen Verfahren erfolgen. Häufig werden die zur Vorbehandlung eingesetzten Materialien mittels eines Foulards mit nachgelagertem Spannrahmen zum Trocknen aufgebracht. Die Art des Auftragsverfahrens richtet sich dabei in an sich bekannter Weise nach der Art des zu behandelnden Substrats. Die Auftragsmenge liegt dabei in der Regel im Bereich von 5 bis 200 g/m² insbesondere im Bereich von 20 bis 100 g/m². Eine Vorbehandlung ist insbesondere dann von Vorteil, wenn es sich bei dem Träger um Material handelt, das eine lockere oder durchlässige Struktur aufweist, wie im Falle von Filzen, Vliesen, Maschenwaren, losen Geweben und dergleichen.

Die erfindungsgemäß erhältlichen, flexiblen Flächengebilde weisen eine elektrische Leitfähigkeit auf, die ein wirksames Abschirmen elektromagnetischer Felder, insbesondere hochfrequenter elektromagnetischer Felder oberhalb 1 MHz, speziell im Bereich von 100 MHz bis 10 GHz erlaubt. Der für eine wirksame Abschirmung elektromagnetischer Felder notwendige Auftrag an Pulver P ist vergleichsweise geringer als in den Flächengebilden des Stands der Technik. Eine wirksame Abschirmung elektromagnetischer Felder ist gegeben, wenn die nach MIL STD 285 erzielte Dämpfung eines elektromagnetischen Feldes im gewünschten Frequenzbereich im Mittel wenigstens 10 und vorzugsweise wenigstens 20 dB beträgt (entsprechend einer 90 %igen, bzw. 99 %igen Abschirmung). Die erfindungsgemäßen Flächengebilde erreichen diesen Standard und weisen häufig eine bessere Dämpfung auf. Gegenstand der Erfindung ist daher auch die Verwendung der so erhältlichen Flächengebilde zur Abschirmung elektromagnetischer Felder.

Die erfindungsgemäß beschichteten flexiblen Flächengebilde können daher in sehr vielen Bereichen eingesetzt werden, beispielsweise zur Herstellung von Schutzkleidung, z. B. Arbeitsschutzkleidung für Fernmeldetechniker, zur elektromagnetischen Abschirmung von Räumen, z. B. in Form von Vorhängen, Paravents und Wandbekleidungen, zur Abschirmung und Isolierung von Kabeln und elektronischen Geräten, für Schutzvorrichtungen von elektronischen Einheiten oder allgemein von Geräten, die äußeren elektromagnetischen Feldern ausgesetzt sind.

Die erfindungsgemäß erhältlichen flexiblen Flächengebilde sind elektrisch leitfähig, d. h. ihre Flächenleitfähigkeit σ_{FI} für elektrischen Strom wird durch einen Wert von wenigstens 10⁻² Ω⁻¹ von vorzugsweise wenigstens 2 x 10⁻² Ω⁻¹ und insbesondre wenigstens 5 x 10⁻² Ω⁻¹ charakterisiert. Mit anderen Worten, bei einer Probenbreite von 0,1 m, einem Elektrodenabstand von 0,1 m und einer angelegten Spannung von 10 V zeigen sie einen Stromfluss von wenigstens 100 mA, vorzugsweise wenigstens 200 mA und insbesondere wenigstens 500 mA. Insbesondere lässt sich bei den erfindungsgemäß ausgerüsteten flexiblen Trägern ein Leistungseintrag bis 2000 W/m² oder darüber realisieren, ohne dass es zu einer Zerstörung der Ausrüstung kommt. Daher können die so behandelten Träger gezielt durch Durchleiten von Strom erwärmt werden.

Eine weitere Anwendung der erfindungsgemäßen elektrisch leitfähigen Flächengebilde, und speziell Flächengebilde mit einem Träger aus Gewebe und/oder Leder, betrifft daher beheizbare Gegenstände, die wenigstens ein erfindungsgemäßes elektrisch leitfähiges Flächengebilde umfassen. Beispiele hierfür sind Sitze, insbesondere Sitze für Automobile und hierunter speziell die Sitzflächen, weiterhin Wärmedecken und dergleichen. Für diese Anwendungen werden üblicherweise Wärmeeinträge von bis 1000 W/m², häufig jedoch nicht mehr als 300 W/m² erforderlich.

In der Regel wird man so vorgehen, dass man auf die Rückseite des flächigen Trägers, welcher die Sichtfläche des Gegenstands bildet, nach dem erfindungsgemäßen Verfahren die wässrige Polymerzusammensetzung, enthaltend das Pulver P, als netzförmiges Muster aufbringt und verfestigt. Die Rückseite des Trägers kann gegebenenfalls vorbehandelt sein. Wenn man durch das so erhaltene Flächengebilde elektrischen Strom leitet erwärmt sich das Flächengebilde aufgrund des Leitungswiderstands. Gleichzeitig bildet der Träger eine Isolierung. Auf diese Weise lässt sich in flexible Träger, Insbesondere in Leder und speziell in glatte Lederarten, wie sie im Automobilbau als Sitzbezüge verwendet werden und die häufig als kalt empfunden werden, in einfacher Weise eine Heizung integrieren.

Die erfindungsgemäßen elektrisch leitfähigen, textilen Flächengebilde zeichnen sich zudem durch einen weichen Griff aus. Das erfindungsgemäße Muster ist zudem Abriebfest. Vorteilhafterweise weisen die erfindungsgemäßen Flächengebilde eine höhere Flexibilität und einen weicheren Griff auf als die flächig beschichteten textilen Flächengebildes des Stands der Technik.

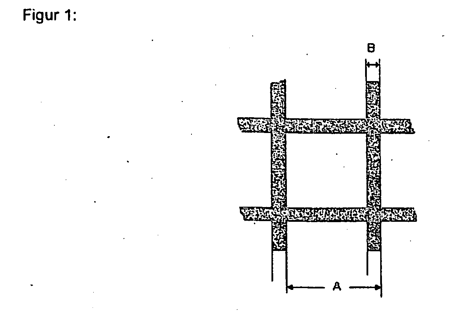

Figur 1: Schematischer Ausschnitt eines netzförmigen Musters, das aus zwei zueinander orthogonalen Linienscharen parallelen Linien mit dem Abstand A und der Breite B gebildet wird. Die dunklen Bereiche stellen die mit der Polymerzusammensetzung belegten Bereiche des Musters dar.

Die folgenden Abbildungen und Beispiele sollen die Erfindung verdeutlichen. Die Erfindung ist jedoch nicht auf die Beispiele beschränkt.

### I Herstellungsbeispiele

### 1. Zusammensetzung Z1

60 Gew.-Teile einer kationischen, vernetzbaren wässrigen Polyesterurethan-Dispersion mit einer Glasübergangstemperatur von -5 °C und einem Feststoffgehalt von 50 Gew.-% und 40 Gew.-Teile Wasser wurden in einem Dissolver bei Raumtemperatur homogenisiert. Anschließend fügte man unter Rühren 0,5 bis 1,0 Gewichtsteil(e) Hydroxymethylcellulose als wässrige 1 bis 2 gew.-%ige Lösung hinzu und stellte mit Ammoniak/Wasser den pH-Wert auf 9,0 bis 9,5 ein. Die Viskosität des Gemisches betrug etwa 1000 mPas. Anschließend rührte man 60 Gewichtsteile eines elektrisch leitfähigen Pulvers P ein und rührte, bis die Lösung homogen war.

Als wässrige kationische Polyesterurethandispersion wurde Rotta® WS 80525 der Fa. Rotta GmbH, Mannheim, eingesetzt.

Als elektrisch leitfähiges Pulver P, dienten mit Silber beschichtete Glashohlkugeln aus Borosilikat-Glas mit einem mittleren Partikeldurchmesser von 16,5 µm und einem Silbergehalt von 32,3 Gew.-%. Diese Kugeln unter der Bezeichnung Conduct-O-Fil SH 400 S 33 von der Firma Potters-Ballotini, Kircheim-Bolanden, Deutschland, vertrieben.

### 2. Zusammensetzung Z2:

Analog Zusammensetzung Z1 stellte man eine Beschichtungszusammensetzung her, wobei man jedoch anstelle von 60 Gew.-Teilen Pulver P 60 Gew.-Teile einer Mischung aus Pulver P und versilberten Kupferblättchen im Mengenverhältnis von 1:2 einsetzte.

Die versilberten Kupferblättchen hatten eine Partikelgröße < 63 µm (88 % < 40 µm) und enthielten 13 Gew.-% Silber. Da Kupferpulver wird unter der Bezeichnung KONTAKTARGAN der Fa. Eckart, D-90763 Fürth, vertrieben.

### 3. Zusammensetzung Z3:

30 Gew.-Teile einer handelsüblichen, anionischen, vernetzbaren wässrigen Polyesterurethan-Dispersion mit einer Glasübergangstemperatur von -5 °C und einem Feststoffgehalt von 50 Gew.-% (Rotta® WS 80525) wurden mit 16 Gew.-Teilen Wasser und 54 Gew.-Teilen einer wässrigen Dispersion von Poly(3,4-ethylendioxythiophen)/Polystyroisulfonat (Baytron® P) in einem Dissolver bei Raumtemperatur homogenisiert. Anschließend fügte man unter Rühren 0,5 bis 1,0 Gewichtsteil(e) Hydroxymethylcellulose als wässrige 1 bis 2 gew.-%ige Lösung hinzu und stellte mit Ammoniak/Wasser den pH-Wert auf 9,0 bis 9,5 ein. Die Viskosität des Gemisches betrug etwa 1000 mPas. Anschließend rührte man 60 Gewichtsteile eines elektrisch leitfähigen Pulvers P ein und rührte, bis die Lösung homogen war.

Bei der wässrigen Dispersion von Poly(3,4-ethylendioxythiophen)/Polystyrolsulfonat handelt es sich um das Produkt Baytron® P der BAYER AG, Leverkusen, das 0,5 Gew.-% kationisches Poly(3,4-ethylendioxythiophen und als Gegenion 0,8 Gew-% Polystyrolsulfonat enthält.

### II. Beschichtungsverfahren:

1. Allgemeine Vorschrift ohne Vorbehandlung auf Gewebe (Muster 1 bis 5):
   Die Beschichtungszusammensetzung Z1 wurde auf ein Baumwoll-Polyester-Mischgewebe mit einem Flächengewicht von 59 g/m² mit einer Rotationsschablone als ein netzförmiges Muster aus zwei zueinander orthogonalen Scharen paralleler Streifen (siehe Abb. 1) aufgebracht. Nach dem Aufbringen der Beschichtungszusammensetzung trocknete man 2 min. bei 150 °C. Die Streifenbreite, der Abstand der parallelen Streifen (Rastergrüße), das Flächengewicht des Trockenauftrags und der Flächenauftrag an Silberkugeln ist in Tabelle 1 angegeben (Muster 1 bis 5).
2. Allgemeine Vorschrift mit Vorbehandlung auf Polyester/Polyamid-Vlies (Muster 6 bis 10):
   Zunächst wurde wässrige Dispersion eines handelsüblichen anionischen Polyurethans mit einem Feststoffgehalt von 50 Gew.-%, einem Stickstoffgehalt von 1,2 Gew.-% und einer Viskosität von 5000 mPa.s (Rotta-Coating 80525 der Fa. Rotta GmbH, Mannheim) mittels Luftrakel auf ein Polyester/Polyamid 70/30-Vlies mit einem Flächengewicht von 125 g/m² aufgebracht. Anschließend wurde 2 min. bei 150 °C getrocknet. Die Trockenauflage betrug 30 g/m². Analog der unter 1. beschriebenen Vorgehensweise wurde die Beschichtungszusammensetzung Z1 als ein netzförmiges Muster aus zwei zueinander orthogonalen Scharen paralleler Streifen auf die so vorbehandelte Seite des Vlies aufgebracht und getrocknet. Die Streifenbreite, der Abstand der parallelen Streifen (Rastergröße), das Flächengewicht des Trockenauftrags und der Flächenauftrag an Silberkugeln ist in Tabelle 1 angegeben.
   Allgemeine Vorschrift mit Vorbehandlung auf Leder (Muster 11 bis 15):
      Zunächst wurde eine Beschichtungszusammensetzung auf Basis einer wässrigen Polyacrylat-Dispersion mit einer Viskosität von 3500 mPa.s und einem Feststoffgehalt von 20 Gew.-% (Dustbinder RS der Fa. Rotta GmbH, Mannheim) auf die aufgeraute Rückseite eines Rindleders mit einer für Autositze üblichen Qualität mit einem Rollcoater aufgetragen. Anschließend wurde 2 min. bei 150 °C getrocknet. Die Trockenauflage betrug 30 g/m². Anschließend wurden auf die so vorbehandelte Seite des Leders. Beschichtungszusammensetzungen Z1 als ein netzförmiges Muster aus zwei zueinander orthogonalen Scharen paralleler Streifen aufgebracht und getrocknet. Die Streifenbreite, der Abstand der parallelen Streifen (Rastergröße), das Flächengewicht des Trockenauftrags und der Flächenauftrag an Silberkugeln ist in Tabelle 1 angegeben (Muster 11).

**Tabelle 1:**

| Muster Nr. | Strichbreite [mm] | Raster [mm] | Abgedeckte Fläche [%] | Trockenauflage [g/m²]* | Auflage Pulver [g/m²]** |
|---|---|---|---|---|---|
| 1 | 2 | 7 | 49 | 28 | 17 |
| 2 | 1 | 4 | 43,8 | 30 | 18 |
| 3 | 1 | 6 | 30,6 | 18 | 11 |
| 4 | 2 | 12 | 30,6 | 15 | 11 |
| 5 | 1 | 11 | 17,4 | 11 | 7 |
| 6 | 2 | 7 | 49 | 39 | 18 |
| 7 | 1 | 4 | 43,8 | 37 | 19 |
| 8 | 1 | 6 | 30,6 | 23 | 12 |
| 9 | 2 | 12 | 30,6 | 18 | 12 |
| 10 | 1 | 11 | 17,4 | 9 | 8 |
| 11 | 1 | 11 | 17,4 | n.B. | n.B. |

### III Untersuchung der elektrischen Leitfähigkeit:

Die Messung der Stromstärke erfolgte in einem Klimaraum bei 20 °C. Die Luft wies eine Restfeuchte von 65 % auf. Zur Bestimmung der Stromstärke legte man auf ein 10 cm breites Probestücks des jeweiligen beschichteten Trägers auf der Beschichtungsseite zwei mit je 1 kg beschwerte Kupferleisten im Abstand von 10 cm auf. Bei einer angelegten Spannung von 12,5 V wurde die Stromstärke gemessen. Die Ergebnisse sind in Tabelle 2 zusammengestellt.

**Tabelle 2:**

| Muster Nr. | Strom [A] |
|---|---|
| 1 | 2,0 |
| 2 | 2,0 |
| 3 | 2,0 |
| 4 | 2,0 |
| 5 | 0,7 |
| 6 | 2,0 |
| 7 | 2,0 |
| 8 | 1,5 |
| 10 | 1,5 |
| 11 | 1,2 |

### IV Untersuchung der abschirmenden Wirkung:

Zwei koaxiale TEM-Messköpfe wurden beidseitig auf das zu untersuchende Flächengebilde eng gegeneinander und spaltfrei gepresst. Die Messungen erfolgten im Frequenzbereich von 30 MHz bis 6 GHz. In Tabelle 3 sind die bei 450 MHz, 900 MHz und 1,8 GHz gefundenen Dämpfungen in dB angegeben.

**Tabelle 3:**

| Muster Nr. | Elektromagnetische Dämpfung [db] | | |
|---|---|---|---|
| Baumwolle/Polyester Gewebe | | | |
| 1 | -19 | -22 | -16 |
| 2 | -22 | -19 | -17 |
| 3 | -16 | -18 | -13 |
| 4 | -12 | -13 | -6 |
| 5 | -9 | -10 | -6 |

| Polyamid/Polyester-Vlies | | | |
|---|---|---|---|
| 6 | -27 | -23 | -17 |
| 7 | -28 | -24 | -19 |
| 8 | -17 | -13 | -8 |
| 9 | -20 | -15 | -6 |
| 10 | -17 | -13 | -6 |

## Patentansprüche

1. Verfahren zur Herstellung elektrisch leitfähiger, flexibler Flächengebilde, umfassend das Aufbringen einer wässrigen, filmbildenden Polymerzusammensetzung, enthaltend:
i. ein Bindemittel B, umfassend wenigstens ein filmbildendes Polymer und
ii. wenigstens ein feinteiliges, nicht filmbildendes Pulver P mit Kem-Schale-Morphologie, worin das die. Schale bildende Material aus wenigstens einem Edelmetall oder einer überwiegend aus wenigstens einem Edelmetall bestehenden Legierung besteht, mit einem Gewichtsverhältnis von Bindemittel B zu Pulver P im Bereich von 1,5:1 bis 1:20;
in Form eines netzförmigen Musters auf die Oberfläche eines flexiblen, flächigen Trägers, der elektrischen Strom nicht leitet, wobei die mit der Polymerzusammensetzung bedeckten Bereiche des netzförmigen Musters-10 bis 60 % der Gesamtfläche des Musters ausmacht.

2. Verfahren nach Anspruch 1, wobei das netzförmige Muster von einer Vielzahl sich schneidender Streifen gebildet wird, die eine Breite im Bereich von 0,5 bis 5 mm aufweisen.

3. Verfahren nach Anspruch 1 oder 2, wobei die Maschenweite des netzförmigen Musters im Bereich von 0,5 bis 3 cm liegt.

4. Verfahren nach Anspruch 2 oder 3, wobei das Verhältnis von Linienbreite zu Maschenweite im Bereich von 1:3 bis 1:15 liegt.

5. Verfahren nach einem der vorherigen Ansprüche, wobei das die Schale der Pulverteilchen bildende Material zu wenigstens 50 Gew.-% aus Silber besteht.

6. Verfahren nach einem der vorherigen Ansprüche, wobei der Kern der Pulverteilchen aus Glas, Kupfer oder Keramik besteht.

7. Verfahren nach einem der vorherigen Ansprüche, wobei die Pulverteilchen eine kugelförmige Geometrie besitzen.

8. Verfahren nach einem der vorherigen Ansprüche, wobei die Pulverteilchen einen mittleren Durchmesser von 1 bis 100 µm aufweisen,

9. Verfahren nach einem der vorherigen Ansprüche, wobei das filmbildende Polymer eine Glasübergangstemperatur T_{G} im Bereich von -40 bis +40 °C aufweist.

10. Verfahren nach einem der vorherigen Ansprüche, wobei das Bindemittel B wenigstens 50 Gew.-%, bezogen auf das Gesamtgewicht des Bindemittels B, Polyurethane umfasst.

11. Verfahren nach einem der vorhergehenden Ansprüche, wobei das Bindemittel B selbstvernetzend ist.

12. Verfahren nach einem der vorhergehenden Patentansprüche, wobei man in einem ersten Schritt die wässrige Polymerzusammensetzung auf den flexiblen flächigen Träger in Form eines netzförmigen Musters aufdruckt und anschließend die so erhaltene Beschichtung verfestigt.

13. Verfahren nach einem der vorhergehenden Patentansprüche, wobei die wässrige Polymerzusammensetzung als Paste eingesetzt wird.

14. Verfahren nach einem der vorhergehenden Ansprüche, wobei der flexible flächige Träger ausgewählt Ist unter textilem Gewebe und Leder.

15. Elektrisch leitfähiges, flexibles Flächengebilde, erhältlich durch ein Verfahren nach einem der vorhergehenden Patentansprüche.

16. Verwendung eines elektrisch leitfähigen flexiblen Flächengebildes nach Anspruch 15 zur Abschirmung elektromagnetischer Felder.

## Claims

1. Process for producing electrically conductive, flexible sheet materials, which comprises applying an aqueous, film-forming polymeric composition containing:
i. a binder B comprising at least one film-forming polymer, and
ii. at least one finely divided, non-film-forming polymer P having a core-shell morphology in which the material forming the shell consists of at least one noble metal or of an alloy consisting predominantly of at least one noble metal, having a weight ratio of binder B to powder P in the range from 1.5:1 to 1:20;
in the form of a net-shaped pattern to the surface of a flexible, sheetlike carrier which does not conduct electric current, the regions of the net-shaped pattern which are covered with the polymeric composition comprising 10% to 60% of the total area of the pattern.

2. Process according to Claim 1, wherein the net-shaped pattern is formed by a multiplicity of mutually intersecting stripes having a width in the range from 0.5 to 5 mm.

3. Process according to Claim 1 or 2, wherein the mesh size of the net-shaped pattern is in the range from 0.5 to 3 cm.

4. Process according to Claim 2 or 3, wherein the ratio of line width to mesh size is in the range from 1:3 to 1:15.

5. Process according to any one of the preceding claims, wherein the material forming the shell of the powder particles consists of silver to an extent of at least 50% by weight.

6. Process according to any one of the preceding claims, wherein the core of the powder particles consists of glass, copper or ceramic.

7. Process according to any one of the preceding claims, wherein the powder particles have a spherical geometry.

8. Process according to any one of the preceding claims, wherein the powder particles have a median diameter in the range from 1 to 100 µm.

9. Process according to any one of the preceding claims, wherein the film-forming polymer has a glass transition temperature T_{G} in the range from -40 to +40°C.

10. Process according to any one of the preceding claims, wherein the binder B comprises at least 50% by weight, based on the total weight of the binder B, of polyurethanes.

11. Process according to any one of the preceding claims, wherein the binder B is self-crosslinking.

12. Process according to any one of the preceding claims, wherein in a first step the aqueous polymeric composition is printed onto the flexible sheetlike carrier in the form of a net-shaped pattern and subsequently the coating thus obtained is solidified.

13. Process according to any one of the preceding claims, wherein the aqueous polymeric composition is used as a paste.

14. Process according to any one of the preceding claims, wherein the flexible sheetlike carrier is selected from textile fabric and leather.

15. Electrically conductive, flexible sheet material obtainable by a process according to any one of the preceding claims.

16. Use of an electrically conductive flexible sheet material according to Claim 15 for shielding electromagnetic fields.

## Revendications

1. Procédé de fabrication d'une étoffe flexible, électriquement conductrice, comprenant l'application d'une composition polymère filmogène aqueuse, contenant :
i. un liant B, comportant au moins un polymère filmogène et
ii. au moins une poudre P fine non filmogène, ayant une morphologie noyau-enveloppe, dans laquelle le matériau formant l'enveloppe est constitué d'au moins un métal précieux ou d'un alliage constitué principalement d'au moins un métal précieux, avec un rapport de poids du liant B sur la poudre P dans la plage de 1,5:1 à 1:20 ;
sous la forme d'un dessin en forme de réseau sur la surface d'un support plat flexible, qui ne conduit pas le courant électrique, les secteurs du dessin en forme de réseau revêtus par la composition polymère constituant 10 à 60 % de la surface totale du dessin.

2. Procédé selon la revendication 1, dans lequel le dessin en forme de réseau est formé d'une pluralité de bandes se croisant, qui présentent une largeur dans la plage de 0,5 à 5 mm.

3. Procédé selon la revendication 1 ou 2, dans lequel la largeur des mailles du dessin en forme de réseau se situe dans la plage de 0,5 à 3 cm.

4. Procédé selon la revendication 2 ou 3, dans lequel le rapport de la largeur des lignes sur la largeur des mailles se situe dans la plage de 1:3 à 1:15.

5. Procédé selon l'une quelconque des revendications précédentes, dans lequel le matériau formant l'enveloppe des particules de poudre est constitué d'argent pour au moins 50 % en poids.

6. Procédé selon l'une quelconque des revendications précédentes, dans lequel le noyau des particules de poudre est constitué de verre, de cuivre ou de céramique.

7. Procédé selon l'une quelconque des revendications précédentes, dans lequel les particules de poudre possèdent une géométrie sphérique.

8. Procédé selon l'une quelconque des revendications précédentes, dans lequel les particules de poudre présentent un diamètre moyen de 1 à 100 µm.

9. Procédé selon l'une quelconque des revendications précédentes, dans lequel le polymère filmogène présente une température de transition vitreuse T_{G} dans la plage de -40 à +40 °C.

10. Procédé selon l'une quelconque des revendications précédentes, dans lequel le liant B comporte au moins 50 % en poids de polyuréthannes, par rapport au poids total du liant B.

11. Procédé selon l'une quelconque des revendications précédentes, dans lequel le liant B est autoréticulant.

12. Procédé selon l'une quelconque des revendications précédentes, dans lequel la composition polymère aqueuse est imprimée dans une première étape sur le support plat flexible sous la forme d'un dessin en forme de réseau, et le revêtement ainsi obtenu est ensuite durci.

13. Procédé selon l'une quelconque des revendications précédentes, dans lequel la composition polymère aqueuse est utilisée sous forme de pâte.

14. Procédé selon l'une quelconque des revendications précédentes, dans lequel le support plat flexible est sélectionné parmi le tissu textile et le cuir.

15. Etoffe flexible, électriquement conductrice, que l'on peut obtenir par un procédé selon l'une quelconque des revendications précédentes.

16. Utilisation d'une étoffe flexible électriquement conductrice selon la revendication 15 pour le blindage contre les champs électromagnétiques.
